# EUROPEAN PATENT APPLICATION

(11) **EP 3 560 888 A1**
(43) Date of publication of application: **30.10.2019**
(21) Application number: 19157840.0
(22) Date of filing: 18.02.2019
(51) Int. Cl.: C01B 3/24, H01M 8/0612

(54) **A METHOD OF PRODUCING CARBON AND HYDROGEN**

(71) Applicant: Shell Internationale Research Maatschappij B.V., 2596 HR The Hague (NL)
(72) Inventor: KAR, Yusuf, 562149 Bangalore North, Karnataka (IN); DE, Shauvik, 562149 Bangalore North, Karnataka (IN); KANUNGO, Shamayita, 562149 Bangalore North, Karnataka (IN); THAKKAR, Foram Manubhai, 562149 Bangalore North, Karnataka (IN); UPPALA, Balakrishna, 562149 Bangalore North, Karnataka (IN); SANT, Sonal Sant, 562149 Bangalore North, Karnataka (IN)
(74) Representative: Shell Legal Services IP

(57) **Abstract**

The present invention provides a method of producing carbon and hydrogen (H₂), the method at least comprising the steps of:
a) providing a methane-containing stream (10);
b) subjecting the methane-containing stream (10) provided in step a) in a first reactor (2) to a methane conversion reaction thereby obtaining at least carbon and hydrogen;
c) removing a hydrogen-containing stream (30) and a carbon-containing stream (90) from the first reactor (2);
d) storing at least a part of the hydrogen-containing stream (30) as removed in step c);
e) passing hydrogen as stored in step d) to a second reactor (3);
f) reacting the hydrogen as passed to the second reactor (3) in step e) in the second reactor (3) thereby obtaining electricity;
wherein the first reactor (2) is heated using solar energy when the availability of solar energy is above a first pre-defined value, and wherein the first reactor is heated using electricity as generated in the second reactor (3) when the availability of solar energy is below a second pre-defined value.

## Description

The present invention relates to a method of producing carbon and hydrogen from a methane-containing stream.

Various methods of producing carbon and hydrogen from a methane-containing stream are known in the art. A problem with most of the known methods of producing carbon and hydrogen is the large consumption of fossil fuels required for heating required during the conversion of methane into carbon and hydrogen.

In certain technical areas, it has been proposed to use solar energy as a heating source in reactions.

As an example, the article by S.C. Rowe et al. "Nowcasting, predictive control, and feedback control for temperature regulation in a novel hybrid solar-electric reactor for continuous solar-thermal chemical processing", Solar Energy 174 (2018) 474-488, describes a 15kW reactor for the hybridization of concentrated solar and conventional electrical heat.

As a further example, US8673035B2 discloses a solar-thermal reactor that produces hydrogen or synthesis gas.

A problem with the above and other methods wherein solar energy is used as a heating source in reactions, is the inherent issue of intermittency, i.e. solar energy is not continuously available, for example during night time or during cloudy days.

It is an object of the present invention to overcome or minimize the above problems.

It is a further object of the present invention to provide an alternative method of producing carbon and hydrogen wherein solar energy is used as heating source.

One or more of the above or other objects can be achieved by providing a method of producing carbon and hydrogen (H₂), the method at least comprising the steps of:
a) providing a methane-containing stream;
b) subjecting the methane-containing stream provided in step a) in a first reactor to a methane conversion reaction thereby obtaining at least carbon and hydrogen;
c) removing a hydrogen-containing stream and a carbon-containing stream from the first reactor;
d) storing at least a part of the hydrogen-containing stream as removed in step c);
e) passing hydrogen as stored in step d) to a second reactor;
f) reacting the hydrogen as passed to the second reactor in step e) in the second reactor thereby obtaining electricity;
wherein the first reactor is heated using solar energy when the availability of solar energy is above a first pre-defined value, and wherein the first reactor is heated using electricity as generated in the second reactor when the availability of solar energy is below a second pre-defined value.

The present invention surprisingly allows for continuous production of carbon and hydrogen from methane using solar energy, wherein the production can be continued in the temporary absence of solar energy without the need of using fossil fuel (or hydrogen that has been produced outside the method) for the heating as required in the methane conversion reaction.

An important advantage of the present invention is that the amount of CO₂ production is limited (as the carbon atoms in the methane are converted to carbon) and no fossil fuels are required for the heating (or the amount thereof can at least be minimized).

In step a) of the method according to the present invention, a methane-containing stream is provided.

The person skilled in the art will readily understand that methane-containing stream is not particularly limited and may contain several components in addition to methane. Also, the methane may be originating from several sources, including from 'green' sources such as biomass processing plants or 'recycle' sources such as refinery off-gas streams.

Typically, the methane-containing stream comprises at least 70 mol.% methane, preferably at least 80 mol.%, more preferably at least 90 mol.%, even more preferably at least 95 mol.%.

Usually, the methane-containing stream provided in step a) is heated before entering the first reactor. Typically, the heated methane-containing stream has a temperature in the range from 900 to 1400°C, preferably from 950 to 1100°C. According to a preferred embodiment of the present invention, the methane-containing stream is heated by indirect heat exchange against the hydrogen-containing stream removed in step c).

In step b) of the method according to the present invention, the methane-containing stream provided in step a) is subjected in a first reactor to a methane conversion reaction thereby obtaining at least carbon and hydrogen.

The person skilled in the art will readily understand that the methane conversion reaction and the first reactor can vary widely. Also, as the person skilled in the art is familiar with such methane conversion reactions and reactors, these are not discussed here in detail. Examples of methane conversion reactions are disclosed in *"*Hydrogen production by methane decomposition. A review." by H.F. Abbas et al., International Journal of Hydrogen Energy 35 (2010), 1160-1190 and *"*Plasma pyrolysis of methane to hydrogen and carbon black" by J.R. Fincke et al., International Journal of Hydrogen Energy 41 (2002), 1425-1435.

Typically, the first reactor comprises electrical heaters which - when needed - use electricity as generated in the second reactor.

Typically, the temperature in the first reactor is at least 900°C, preferably at least 1000°C, more preferably at least 1100°C. Typically, the temperature in the first reactor is at most 2000°C. Furthermore, the pressure in the first reactor is typically between 0.5 to 5.0 bara.

Preferably, the methane conversion reaction in step b) is a non-catalytic conversion reaction. An advantage hereof is that the produced carbon contains no catalyst-originating contaminants.

In step c) of the method according to the present invention, a hydrogen-containing stream and a carbon-containing stream are removed from the first reactor. Typically, the hydrogen-containing stream is removed as an overhead stream from the first reactor, whilst the carbon-containing stream is removed as solids-stream at or near the bottom of the first reactor.

According to an especially preferred embodiment of the present invention, the hydrogen-containing stream removed in step c) is, after optionally cooling against the methane-containing stream provided in step a), separated in a separator to obtain a hydrogen-enriched stream and a methane-enriched stream, wherein the hydrogen-enriched stream is sent to a storage unit for the storing of step d). Preferably, the hydrogen-containing stream removed in step c) is, again after optionally cooling against the methane-containing stream provided in step a), separated to remove fines and subsequently compressed in a compressor before it is passed to the separator to obtain the hydrogen-enriched stream and the methane-enriched stream.

Furthermore, it is preferred that the methane-enriched stream is combined with the methane-containing stream provided in step a).

In step d) of the method according to the present invention, at least a part of the hydrogen-containing stream as removed in step c) is stored, in a storage unit.

In step e) of the method according to the present invention, hydrogen as stored in step d) is passed to a second reactor.

In step f) of the method according to the present invention, the hydrogen as passed to the second reactor in step e) is reacted in the second reactor thereby obtaining electricity.

As the person skilled in the art is familiar with reactors in which hydrogen is reacted to obtain electricity, the second reactor is not further discussed here in detail. Preferably, the second reactor is a hydrogen fuel cell.

According to the present invention, the first reactor is heated using solar energy when the availability of solar energy is above a first pre-defined value, and wherein the first reactor is heated using electricity as generated in the second reactor when the availability of solar energy is below a second pre-defined value.

The person skilled in the art will readily understand how to select the first and second pre-defined values (which will depend on the circumstances, the type and size of the methane conversion reaction, etc.). Also, the first and second pre-defined values may be the same or different.

In a further aspect, the present invention provides an apparatus for producing carbon and hydrogen (H₂), the apparatus at least comprising:
- a first reactor for converting a methane-containing stream provided thereby obtaining at least carbon and hydrogen;
- a storage unit for storing hydrogen as obtained in the first reactor;
- a second reactor for reacting hydrogen as passed from the storage unit thereby obtaining electricity;
wherein during use the first reactor is heated using solar heating when the availability of solar energy is above a first pre-defined value, and wherein the first reactor is heated using electricity as generated in the second reactor when the availability of solar energy is below a second pre-defined value.

Hereinafter the present invention will be further illustrated by the following non-limiting drawings. Herein shows:

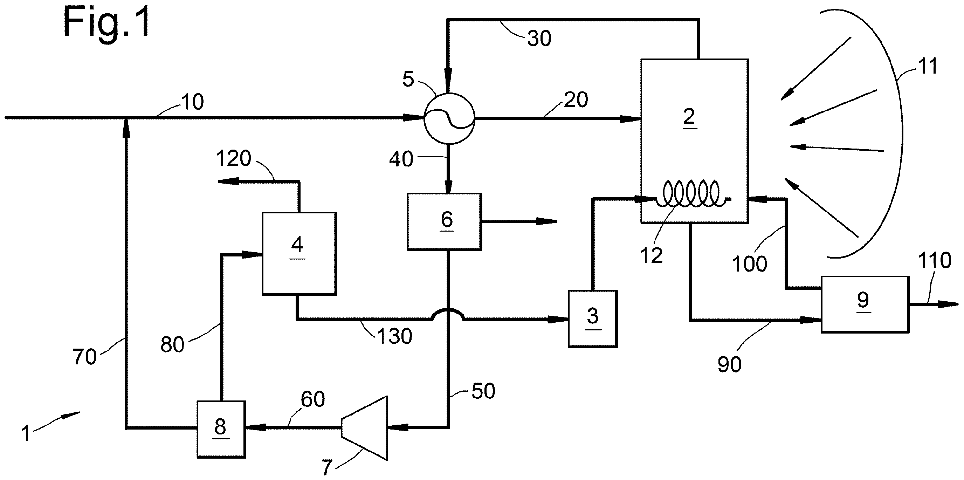

Fig. 1 schematically a flow scheme of an embodiment of the method of producing carbon and hydrogen according to the present invention.

For the purpose of this description, same reference numbers refer to same or similar components.

The flow scheme of Figure 1, generally referred to with reference number 1, shows a first reactor 2, a second reactor 3 (a hydrogen fuel cell), a hydrogen storage unit 4, a heat exchanger 5, a fines separator 6, a compressor 7, a hydrogen separator 8 and a solids handler 9.

In the embodiment as shown in Figure 1, the first reactor 2 is a reactor connected to a solar concentrator 11 and provided with electrical heaters 12 which - when needed - use electricity as generated in the second reactor 3.

During use, a methane-containing stream 10 is subjected in the first reactor 2 to a methane conversion reaction thereby obtaining at least carbon and hydrogen. The hydrogen and carbon are removed from the first reactor 2 as a hydrogen-containing stream 30 and a carbon-containing stream 90.

As shown in the embodiment of Fig. 1, the methane-containing stream 10 is heated against the hydrogen-containing stream 30 in the heat exchanger 5 before entering the first reactor 2 as heated methane-containing stream 20.

The hydrogen-containing stream 30 is separated in the hydrogen separator 8 to obtain a hydrogen-enriched stream 80 and a methane-enriched stream 70. The hydrogen-enriched stream is sent to the hydrogen storage unit 4. The methane-enriched stream 70 is combined with the methane-containing stream 10. As shown in the embodiment of Figure 1, the hydrogen-containing stream 30 is before being separated in the hydrogen separator 8 as (compressed) stream 60 first cooled against the methane-containing stream 10 in the heat exchanger 5, then separated as stream 40 in the fines separator 6 and compressed in compressor 7 as stream 50.

From the hydrogen storage unit 4 a hydrogen product stream 120 may be removed which may be sold as a product or used in a nearby plant.

The carbon-containing stream 90 is sent to the solids handler 9. From the solids handler 90 a carbon product stream may be removed which may be sold as a product or used in a nearby plant. If desired, a part of the solids from the solids handler 9 may be recycled to the first reactor 2.

The first reactor 2 is heated using solar energy (using the solar concentrator 11) as long as the availability of solar energy is sufficiently high (above a first pre-defined value). However, when the availability of solar energy drops below a second pre-defined value, then electricity can be generated in the second reactor 4 by passing hydrogen as stored in the hydrogen storage unit 4 (as stream 130) to the second reactor 3 and reacting the hydrogen thereby obtaining electricity. The electricity obtained in the second reactor 3 can then be used to heat the electrical heaters 12 in the first reactor 2. Consequently, the first reactor 2 can run continuously, even during the night or on cloudy days with intermittent availability of solar energy.

The person skilled in the art will readily understand that many modifications may be made without departing from the scope of the invention.

## Claims

1. A method of producing carbon and hydrogen (H₂), the method at least comprising the steps of:
a) providing a methane-containing stream (10);
b) subjecting the methane-containing stream (10) provided in step a) in a first reactor (2) to a methane conversion reaction thereby obtaining at least carbon and hydrogen;
c) removing a hydrogen-containing stream (30) and a carbon-containing stream (90) from the first reactor (2);
d) storing at least a part of the hydrogen-containing stream (30) as removed in step c);
e) passing hydrogen as stored in step d) to a second reactor (3);
f) reacting the hydrogen as passed to the second reactor (3) in step e) in the second reactor (3) thereby obtaining electricity;
wherein the first reactor (2) is heated using solar energy when the availability of solar energy is above a first pre-defined value, and wherein the first reactor is heated using electricity as generated in the second reactor (3) when the availability of solar energy is below a second pre-defined value.

2. The method according to claim 1, wherein the methane-containing stream (10) comprises at least 70 mol.% methane, preferably at least 80 mol.%, more preferably at least 90 mol.%, even more preferably at least 95 mol.%.

3. The method according to claim 1 or 2, wherein the methane-containing stream (10) is heated by indirect heat exchange against the hydrogen-containing stream (30) removed in step c).

4. The method according to any one of the preceding claims, wherein the methane conversion reaction in step b) is a non-catalytic conversion reaction.

5. The method according to any one of the preceding claims, wherein the hydrogen-containing stream (30) removed in step c) is, after optionally cooling against the methane-containing stream (10) provided in step a), separated in a separator (8) to obtain a hydrogen-enriched stream (80) and a methane-enriched stream (70), wherein the hydrogen-enriched stream (80) is sent to a storage unit (4) for the storing of step d).

6. The method according to claim 5, wherein the methane-enriched stream (70) is combined with the methane-containing stream (10) provided in step a).

7. An apparatus (1) for producing carbon and hydrogen (H₂), the apparatus at least comprising:
- a first reactor (2) for converting a methane-containing stream (10) provided thereby obtaining at least carbon and hydrogen;
- a storage unit (4) for storing hydrogen as obtained in the first reactor (2);
- a second reactor (3) for reacting hydrogen (130) as passed from the storage unit (4) thereby obtaining electricity;
wherein during use the first reactor (2) is heated using solar heating when the availability of solar energy is above a first pre-defined value, and wherein the first reactor is heated using electricity as generated in the second reactor (3) when the availability of solar energy is below a second pre-defined value.
